Europäisches Patentamt

European Patent Office

Office européen des brevets

(19)

Numéro de publication: **0 297 200**

**A1**

## (12) DEMANDE DE BREVET EUROPEEN

(21) Numéro de dépôt: 87870044.2

(22) Date de dépôt: 03.04.87

(51) Int. Cl.4 **C02F 1/00 , B01D 53/26**

Revendications modifiées conformément à la règle 86 (2) CBE.

Une (Des) partie(s) illisible(s) du texte orginal de la demande a (ont) été exclue(s) de la publication.

(30) Priorité: 04.04.86 ES 553734

(43) Date de publication de la demande:
04.01.89 Bulletin 89/01

(84) Etats contractants désignés:
**AT BE CH DE FR GB GR IT LI LU NL SE**

(71) Demandeur: **Hernandez de Los Angeles, Manuel**
**calle Siete Cerros no 8 Somosaguas**
**E-28023 Madrid(ES)**

(72) Inventeur: **Hernandez de Los Angeles, Manuel**
**calle Siete Cerros no 8 Somosaguas**
**E-28023 Madrid(ES)**

(74) Mandataire: **Francos-Florez Cristopulos,**
**Amelia**
**Calle Serrano, 72**
**E-28001 Madrid(ES)**

(54) Procédé et appareil éolien-solaire pour l'obtention directe de l'eau par condensation de celle contenue dans la vapeur d'eau de l'air atmosphérique.

(57) Procédé et dispositif éolien-solaire permettant d'obtenir de l'eau en condensant de la vapeur d'eau contenue dans l'atmosphère par expansion adiabatique, refroidissement direct et/ou utilisation d'agents nucléants.

EP 0 297 200 A1

Cette demande de brevet a pour objet une distillerie eolienne pour de la direct l'obtention vapeur de l'eau contenue dans l'atmophere l'air que nous respirant est melange dé vapeur d'eau de 1 15 de 1% a 2,5% a 3% de vapeur d'eau suivant sa temperature et sandegré de suturation. Un jour sec et froid d'hiver la quantite de vapeur d'eau peut descendre au minimum et un jour chaud et humide cette quantité pent atteindre le maximum. Le porucentage de sturation, ainsi que l'humidité relative de l'air depend du lien, de la direction du vent et de la nubosité. Ainsi sous un ciel convert au bord de la mer, quand le vent soriffle de l'ocean vers laterre nous amons toutes les conditions reunies pour trauves une humidité maximum.

L'humidité de l'atmosphere (vapeur d'eau en suspension daus l'air) ne se convertil pas obligatoirement en pluie les continents ou les lles - selon KAHAN y EDDY (1970) seulament un 10% de l'humidité armospherique se transforme en pñuies au dessus des Etats Unis. Il est donc primordial d'augmenter sensiblement cette condensation specialement dans les climats chauds et temperes et c'est justement la base sur laquelle repose mon invention. Jusqu'a présent ce qui a eté tenté quelque fois avec succés est uniquement une activation et un control des procedes naturels des precpitacions atmospheriques dans un endroitde terminé. C'est un des plus importants problems de production de "Pluie artificielle" etant donné que les nuages sont en mouvement et que la pluie se produit un certain tempsapres la formation de nuages. Il faut environ 30 mm pour qu'une goutt atteigne la taille et le poids indispensable a sa chute en nuages de type cumulus (convechif) et si a ce momente lá souffle un vent de 49 km heure la precipitation aura lieu a 25 kilometres de la formation nuageuse, ce quia eté a l'origine de becaucoup de problemes légaux aux Etats Unis, et a travers le "Bureau of reclamation" principalment deans les Etats de L'Est et du Sud ant etees établies des loies sur la production de "Pluie Artificielle".

Je ne revendique pas seulement un appareil pour l'obtention de l'eau contenue dans la vapeur d'eau atmospherique, mais je revendique la paternité proprement dite, du principe d'obtention de l'eau contenue dans l'atmophere d'une maniere economique et commercialisable.

Je ne base pas seulement a puricipe sur les theorémes basiques de la themodinamique moderne des phénoménes atmospheriques, mais aussi, pour arriver à un résultat economique et commercialement possible, j'ai reussi a les combiner, comme nous verrons plus en avant. d'eme certaine facon, aussi bien teoriquement que par experiences qui datent de l'annee 1.950 au Sud de Santa Cruz de Teneriffe (Iles Canaries); de 1.955 a 59 a Casablanca (Maroc) qui a un degré hygrometrique de 92%, en 1.954 et 55, et derrierement en 79 et 82 daus le DARIEN zone casi desrtique de Panama.

Je ferai tout d'abord une exposition de tous les éléments sur lesquels j'ai base ma theorie et ensuite des experiences qui m'ont ammene a utiliser cette theorice de facon a arriver finalement a la nuse au point de ma distillerie eolienne pour l'obtention directe de l'eau contenue dans la vapeur d'eau dans l'air attmospherique d'une facon economique et commercialisable.

1o J'ai, tout d'abord, consideré l'air comme ce qu'il est c'est-a-dire un melange gazeux puisqu'el n'est pas un compose chimique, mense s'el est constitue, au moins jusqu'a une altitude de l'atmosphere terrestre de 90 kms et en un 99,9 97% par les cinq gazs: hydrogene, oxijgene, argon, dioxyde de carbone et vapeur d'eau. Et de plus un melange de gazs tres compressible puisque a cause de ce phenomene la densite moyenne de l'air, diminue a partir de 1,2 kg/m³ a la superficie terrestre, jusqu'a 0,7 kg/m³ a une hauteur de 5000 metres qui est en meme temps la limite approximative de l'habilite.

2o Un autre puricipe sur lequel je base mon invention, le plus positif de tous, es que: L'air dans les conches inferieures de l'atmosphere est soumis a des turbulences, sous l'influence relief du terrain et de la vitesse du vent. La vapeur d'eau trouve ainsi au moyen de ces turbulences son moyen de transport pour sa diffusionse plus, et c'est le point le plus important, pour mon invention, en general, la concetration de vapeur d'eau dans l'air diminue avec l'altitude.

C'est la ou commence le cyde hijdrologique selon lequel les eaux de la mer, des fleuves, lacs banages, etc sous l'accion du soleil, s'evaporent, et aussi par l'evapotranspiration sur la superfice terrestre.

3o puisque la production d'eau que j'obtiens avec ma distillerie tolienne par condensation provient de la vapeur d'eau contenne dans l'atmosphere je vais decrire les lois de thermodijnamique dont je me duis servi pour obtenier d'une facon practique et economique cette source d'eau qui est pour moi la deuxieme reserve d'eau apres les oceans (97%) mais la prennere reserve, aux capes glacieres et aux laux de superficie, puisque contrairement a ce qu'affirme SUTCLIFFE en 1956 on ne peut pas evaluer en centimetres de pluie la quantete moyenne humite emmagasiner dans l'atmosphere, et la reside l'erreur de SUTCLIFFE puisque les pluies ne representent jeulement que le 10% de toute l'eau contenue dans la vapeur d'eau de l'air qui traverse les continents (KAHAN Y EDDY 1970) alors que SUTCLIFFE, se trompe losqu il affirme que "la quantite moyenne d'eau emmagasinee dans l'atmosphere est de 2,5 cm approximativement et quillesuffirai seulement a 10 jours de pluí sur toute la "terre"; SUTCLIFFE ou blia surement en avancant cela que l'eau de l'atmosphere, provient, tout d'abord de l'evaporation de l'eau salee des oceans (qui contiennent 87% du total deseaux) et des continents au moyen du phenomene de l'evaporation de l'evapotranspiration et que ces deux sources sont mepuisables ; et qu'au moyen des ladiations solaires est pompee d'une facon ininterrompue grace a ce phenomene, vapeur d'eau a l'atmosphere comme on utikisait une pompe de mouvement continue.

SUTLIFFE oublia aussi que tres souvent, et en beauconp d'endraits du monde 70% des precipitations qui arrivent sur terre et quelques fois 90% du certains endroits sont rendues a l'atmosphere par le systeine d'evapotranspirationmosphere. Dans ces 10 jours ce scientifique u a pastenu .compte du vent, des radiations solaires et de la "pompe" de mouvement coutinu qu'est l'evapotranspiration. El c'est la sussus, que moi, en silence, et dans les differents pays que j'enumere au debrit, et pendant 30 ans d'etudes silencieuses et d'experiences je me base pour creer ce principe selon lequel pent produire la plus grande quantile d'eau douce non seulement dans des endroits chands on temperes mais aussi dans un futer proche pourra s'utilises pour augmentes le niveau des barrages de facon a maintenir le reudement des turbines por la production hydroelectrique, pour la agriculture et pour remplir les reservois d'eau potable, puisque l'eau obtenue par ce piocede ne contient aucune des impuretes que peut eutraitres par exemple les eaux de pluie pendaut trafet.

Ce principe le tradiut par un theoreme et une formule je revendique la paternite universelle et le pusiute comme suit:

La vapeur d'eau contenue dans l'atmosphere est la plus grande souce d'eau douce dont dispose l'homme et son evaluation est determinee en une seccion perpendiculaire a la direction du vent par le poids de l'humidite alsolue et la vitesse du vent daus le meme endroit et ceci, independement des preciptations quelequ soit lems origines.

Formule qui de'montre mon theoreme:

Q = S x V x PHAB

Oú: Q = quantite d'eau en 1/1000 litres/heure.

S = section en m².

PHAB = humidite alsolue en grs/m³.

V = vitesse du vent en m/heure.

Je definis cette fomule comme delle de:

Quantite d'eau contenue dans l'atmosphere dans une surface determinee et perpendiculaire a la direction du vent en foction de sa propre vitesse et de sa tenuer aalsolue en vapeur d'eau.

Cette formule est avec les formules classiques de thermodynamique de l'atmosphere que je vais decrire plus loir, les elements technico physiques qui m'ont amene a la conception et construction de mes distilleries Eoliennes par condensation.

4o Influences des changements de temperature et de pression dans la condensation.

Pour que com mence la condensation dans une masse d'air humide il est necessaire que l'air soit sature c'est a dire que la tension e de la vapeur d'eau arrive a egaler la tension masimum E (T) qui correspand la temperature T de l'air, et ceci peut se passer de deux facans:

En diminamnt E (T) jusqui a cequille alteigne la valeur ce qui implique que descende la temperature T de l'air, la condensation qui se produit de cette facon s'appelle: condensation par le froid.

Augmentaut e jusqu'a atteindre la valeur de E (T) que l'ou obtient en evaporant de nouvelles quantites d'eau: cette condenstion ainsi obtenue sappelle condensation par evaportion.

La plus grande partie des condensations qui se produisent daus l'atmosphere sont par refroidissemente de l'air.

Le refroidissemente de l'air, daus l'armosphere peut se produire par quelques unes des formes suivantes:

a) refroidissemente direct, qui se produit par perte de chaleur par irradiation, ou bien par conduction, lorsque l'air est en contact aveu des corps plus froid.

b) refroidissemente par melange de l'air humide aver d'autres masses d'air plus froid.

c) refroidissemtn par elevation adiabatique qui est du au travail d'expansion que l'air effecture quand il s'eleve aux couches de pression plus basse.

Dans l'atmosphere les condensations le plus importantes sont celles que sont produites par condensation adiabatique puisque les processus convectives qui ant bien dans l'atmosphere, occasionent de grandes baisses de temperature qui sont beaucoup plus importantes que celles produitent par d'autres pocedes.

Ensuite, d'après mes théories et mes expériences que j'ai menées j'ai choisi pour mes distilleries le système de "refroidissement direct" mais employer uniquement ce procédé résultait d'un coût trop élevé, surtout en énergie puisque pour arriver à la température nécessaire pour la formation de rosée, ou température de saturation il est nécessaire quelques fois de descendre quelques 8,5 ou 10°C la zone de refroidissement et ceci pour une dépense d'énergie très élevée et coûteuse, puisque indépendante de l'autonomie énergétique produite par la propre distillerie Eolienne. donc après plusieurs expériences j'ai combiné le refroidissement direct avec une augmentation de la tension de la vapeur d'eau par la diminution du volume de l'air entrant dans la distillerie, comme conséquence de l'augmentation de la pression de celui-ci et qui en plus se justifie à travers les équations des gaz comme suit:

Pour voir comment la variation de la pression peut affecter le phénomène de la condensation voyons ce que dit le théorème des expansions relatives:

La proportion du mélange $\underline{m}$ et l'humidité spécifique $\underline{q}$ sont des caractéristiques conservatrices des masses d'air. En effet s'il n'y a pas de mélange d'une masse d'air avec une autre, son $\underline{m}$ et son $\underline{q}$ ne peuvent varier presque uniquement que par évaporation ou condensation de l'eau dans sa masse mais comme:

$$\frac{e}{p} = \frac{m}{m + 0,622}$$

si $\underline{m}$ ne varie pas. le second membre sera une constante, et donc, sera aussi un invariant le quotient e p c'est-à-dire se réalisera l'équation:

$$\frac{e_1}{p_1} = \frac{e_2}{p_2} \quad ou \quad \frac{e_2 - e_1}{e_1} = \frac{p_2 - p_1}{p_1}$$

où $\underline{e}$ est la tension de vapeur et $\underline{p}$ est la pression atmosphérique.

Autrement dit, l'expansion relative de chaque ingrédient est égale à l'expansion relative du mélange de l'air humide, de facon que celui-ci évolue d'une forme individuelle et sans que se produise évaporation ni condensation.

D'autre part, la partie gazeuse de l'eau dans l'atmosphère est la vapeur d'eau et dans l'atmosphère, on peut supposer que celui-ci se comporte comme un gaz idéal. Son équation d'état sera donc:

$e = v \cdot R_v \cdot T$ ou $\underline{e}$ est la pression de vapeur (tension de vapeur), v est la densité de vapeur et $R_v$ est la constante individuelle des gaz par la vapeur d'eau.

Cette équation aussi peut s'exprimer comme suit:

$e \cdot V = n \cdot R \cdot T$ qui est l'équation générale des gaz parfaits.

Donc. pour un état initial ($e_1$. $V$, $T_1$), ces coordonnées thermodynamiques seront reliées suivant l'équation :

$e_1 \cdot V_1 = n \cdot R \cdot T_1$

et si nous amenons cette quantité de vapeur à un état final ($e_2$, $V_2$, $T_2$) ces coordonnées thermodynamiques seront reliées par l'équation:

$e_2 \cdot V_2 = n \cdot R \cdot T_2$ si nous supposons que la transformation est isothermique (T = cte.) nous aurons $T_1 = T_2$ et donc $e_1 \cdot V_1 = e_2 \cdot V_2$ d'où $e_1 V_2$

$$\frac{}{e_2} \overset{=}{\underset{}{}} \frac{}{V_1}$$

Donc à température constante, la valeur de la tension de la vapeur d'eau est inversement proportionnelle au volume occupé par lui-même (volume de l'air humide).

$$En\ effet:\ comme\ \frac{e_1}{p_1} = \frac{e_2}{p_2} \quad et \quad \frac{e_1}{e_2} = \frac{p_1}{p_2}$$

On voit que la tension de la vapeur d'eau. en une transformation où l'on peut appliquer ce théorème, varie de la même facon que la pression atmosphérique.

Donc, si nous augmentons la pression, par exemple, en diminuant son volume la tension de la vapeur d'eau augmente dans la même proportion que la pression et ceci est : le second principe important sur lequel je base l'exploitation économique de l'obtention de l'eau contenue dans la vapeur d'eau de l'air atmosphérique puisqu'avec un système simple et peu coûteux et d'une façon continue, je diminue le volume de l'air avant de le refroidir et de cette façon je rapproche le plus possible la température de saturation (rosée) de la température ambiante nécessitant ainsi qu'un minimum de froid additionnel que j'obtiens directement de l'énergie Eolienne de la propre Distillerie Eolienne, comme nous verrons aussitôt en décrivant son fonctionnement.

Mon invention est caractérisée par un équipement qui placé dans des endroits déterminés par ses conditions: vent, température et humidité absolue, réunit les conditions pour obtenir une source d'eau en fonction de mon théorème et formule, Page n° 5, paragraphes 10, 15 et 20.

La condition principale pour le bon fonctionnement de cet appareil (Distillerie Eolienne) est que l'ouverture de son conduit d'entrée ou d'admission de l'air soit toujours orientée du côté opposé à la direction du vent, Fig. I, et que son orientation change simultanément suivant les changements de direction du vent. Les mécanismes pour ces changements d'orientation sont connus : petites voiles, ou timons sur lesquels le vent exerce une pression et place l'ouverture de la Distillerie perpendiculaire à la direction du vent et dans le sens opposé à celui-ci. Le mécanisme d'orientation pour les grands modèles peuvent être aussi des ailes ou hélices d'orientation avec commandes électroniques-mécaniques, ou électroniques-hydrauliques qui fassent tourner l'ensemble de façon que son ouverture d'entrée soit toujours orientée dans le sens contraire du vent (2) et (3) Fig. I.

Dans la Fig. I je décris ma Distillerie Eolienne pour réduction du volume et refroidissement direct et dans la Fig. II pour l'utilisation de la perte de vitesse et l'augmentation du volume qu'expérimente une masse d'air quand le vent passe à travers les pâles d'une turbine Eolienne placée dans la section frontale de la distillerie, nous la refroidissons jusqu'à obtenir la température de saturation (rosée) voir (11) Fig. II. L'air au moment de sortir des pâles a une perte de vitesse (de jusqu'à 1/3) et une augmentation de volume en même temps que diminue la pression et se rabaisse à un niveau inférieur à celui de l'atmosphère obtenant alors un refroidissement par expansion adiabétique et une condensation au moyen d'un complément de froid produit par la même turbine Eoliennne (9) Fig. II.

Distillerie Eolienne pour la production d'eau par diminution du volume de l'air (augmentation de la tension de la vapeur qu'il contient) et refroidissement direct.

Une fois orientée, la Distillerie en direction contraire au vent au moyen des mécanismes d'orientation Fig I (1) (2) (7) et (8) l'air arrive dans la Distillerie sur la surface la plus large de son corps conique (3) où il souffre une diminution de volume, une augmentation de tension et, est obligé de traverser la partie la plus froide (9) où se complète la diminution de température jusqu'au point de saturation (rosée) pour que se produise la condensation de la vapeur d'eau contenue dans l'air atmosphérique, l'eau ainsi produite passe de la partie inférieure de la Distillerie au Collecteur (12). Le courant d'air suit la direction V Fig. I et traverse la zone (10) qui est un "séparateur de gouttes" qui a pour objet de séparer les gouttes d'eau que l'air contient encore en suspension et les fait descendre au collecteur (12). L'air, avant de sortir du corps de la Distillerie (3) passe par la turbine Eolienne (11) qui produit l'énergie nécéssaire pour transmettre à travers d'un axe (13) un mouvement au système de transmission (14) qui par une système connu de transmission (15) amènent le mouvement de rotation de la turbine Eolienne (11) à l'ensemble: multiplicateur-réducteur de vitesse, générateur éléctrique et générateur de froid 816) qui d'un côté sert pour entraîner le moteur (8) qui fait fonctionner le système courroie-pignon qui fait tourner sur son axe l'ensemble de la Distillerie (5) pour que l'entrée du vent soit toujours en position perpendiculaire à sa section. En même temps, le générateur mû par la turbine Eolienne nous procure l'énergie nécessaire pour produire du froid dans les évaporateurs situés dans la zone (9) pour ainsi obtenir la température qui condense la vapeur d'eau contenue dans l'air atmosphérique qui traverse la Distillerie en ce moment puisque nous avons obtenu dans cette zone la température de saturation (rosée).

Le collecteur (12) décharge l'eau obtenue dans la Distillerie (3) dans un récipient en forme de courroie circulaire (17) qui a une section rectangulaire, carrée ou circulaire, ou n'importe quelle autre forme, mais avec comme condition que n'importe quel soit le point d'orientation de la Distillerie, en fonction de la direction du vent, le tube collecteur (12) puisse décharger toujours dans ce meme récipient collecteur continu de la Distillerie (17) ce récipient décharge à travers le tube (25) jusqu'à la citerne générale des eaux, du barrage, ou de n'importe quel système auquel est destinée cette "source" d'eau.

Pour pouvoir contrôler la production d'eau en fonction du contenu en vapeur d'eau, dans l'"air atmosphérique (grammes/m³) de l'endroit ou se trouve un "compteur" ou mesureur de la quantité d'eau produite en chaque unité de temps (26) dont les mesures arrivent au panneau de controle (22) situé dans la cabine laboratoire de la Distillerie (21) ou arrivent aussi les mesures de: direction du vent, vitesse du vent, humidité relative, humidité absolue et température, depuis la station météorologique située dans sa partie supérieure Figs. I et II (1), (2) et (19). Ce système nous permettra de déterminer à chaque instant:

1°) Si le froid produit est suffisant pour obtenir dans la zone (9) Figs. I et II le maximum de condensation en fonction de l'humidité absolue et de la vitesse du vent à cet endroit (application de mon théorème et formule. Page n° 5, paragraphes du 5 au 25). Donc si ces renseignements n'existaient pas pour le moins depuis un an il faudrait placer à l'endroit où va s'installer la Distillerie Eolienne, et avant l'implantation de celle-ci, cette station météorologique pour pouvoir obtenir ces renseignements.

Cette étude est d'autant plus intéressante et indispensable puisque c'est elle qui va nous dire si:

a) la perte de vitesse du vent en fonction d'éléments qui s'opposent à lui (6), (13), (14), (27), (28) et (29) Figs. I et II pour employer un système de réfrigération alternative, par compression centrifuge ou de tous autres types qui soient nécessaires: transmission (6), (13) et (14); multiplicateur de r.p.m. (27); générateurs électriques (28) et compresseur (29) Figs. I et II, pour obtenir le complément de froid nécessaire de façon que dans la zone (9) nous obtenions la température de saturation (rosée) si dans ce cas nous avions un débit d'eau Q très petit en fonction de l'humidité absolue contenue dans la vapeur d'eau et des vitesses du vent en fonction de ma formule ($Q = S \times V \times Phab$) dans ce cas nous éliminerions des Distilleries Eoliennes:

b) le système de transmission (6), (13), et (14) nous supprimerions aussi le multiplicateur (27) et le groupe compresseur (28) et à sa place nous installons un groupe ou cycle complet de réfrigération pour le système d'absortion dont la totalité ou une partie de l'énergie nécessaire à son fonctionnement (chauffage) sera l'énergie solaire, dont les panneaux de captation (31) seront situés au meilleur endroit pour son utilisation maximum.

c) Distillerie-Eolienne de condensation de la vapeur d'eau contenue dans l'air atmosphérique par mon système de: "Réfrigération par absortion, énergie solaire et noyaux de condensation" Figs. I et II.

Le système de réfrigération par absortion, comme on le sait, constitue une unité pour refroidissement qui utilise directement la chaleur, sans employer de propulsion ou de machine motrice, seulement des moyens de chauffage constamment et durant toute l'année. Il a aussi l'avantage d'utiliser les réfrigérants les plus économiques, les plus sûres et plus facilement accessibles et son agent absorbant étant simplement du sel. Surtout un avantage important dans le cas qui nous occupe, est que le système d'absorbtion nécessite seulement 2 à 9% de la puissance électrique nécessaire pour l'équipement de réfrigération, type compression. Et le plus grand avantage dans notre cas, est que la source de chaleur pour que fonctionne ce système d'absorbtion peut être en partie ou dans sa totalité la chaleur ou radiation solaire fournie par des procédés thermiques ou photovoltaïques.

Noyaux de condensation: Il est très important de faire remarquer que la condensation se produit plus difficilement, et en espaces "propres" l'humidité en règle générale, doit rencontrer une superficie adéquate sur laquelle elle peut se condenser. La condensation a lieu généralement sur une superficie protégée, qui peut être une portion de terre, ou une plante comme cela arrive dans le cas de rosée ou de gel, alors qu'à l'air libre la condensation commence autour de ce qu'on appelle "noyaux hydroscopiques". Ces particules peuvent être: poussière, fumée, anhydride sulfureux, sels comme: chlorures sodiques, potassiques, ou substances microscopiques similaires, dont les superficies ont la propriété d'etre hygroscopiques, les aérosoles hygroscopiques sont solubles. Il y a aussi des noyaux ou des nucléants hétérogènes comme: le Iodure d'argent, la neige carbonique, ou neige sèche, ainsi que les iodures alcalins (de Cs, Li, K, Rb, Na). Le metaldehide, floroglucial, 1-5 dihydroxinaftaline et autres substances organiques sont aussi très efficaces comme nucléants. Ainsi que l'acide chlorosulforique.

Le nucléant est placé dans les Distilleries-Eoliennes dans des récipients dosificateurs (20) FIGS. I et II dont la quantité est en fonction des dimensions de la Distillerie-Eoliene pour qu'en fonction de la vitesse du vent les dits nucléants atteignent à tout moment le total de la masse d'air qui pénètre dans celle-ci, sa dosification s'éffectue et se contrôle depuis le panneau de commande (22) Figs. I et II en fonction des résultats de la condensation obtenue. Le type de nucléant sera le plus économique et de meilleur rendement que l'on trouvera à l'endroit ou s'installera la Distillerie-Eolienne.

Avec ce système, réfrigération par absortion, nucléants et énergie solaire l' ensemble de Distillerie-Eolienne est le même que les Figs. I et II nous supprimons seulement les transmissions (6), (13) et (14), nous changerions aussi le système (27), (28), (29) pour le circuit complet de production de réfrigération par celui d'absorbtion. Dans tous les nucléants avec leur récipient dosificateur (20) pour que l'opérateur de la Distillerie Eolienne puisse les employer le moment venu, quelque soit le système de réfrigération et quelque soit le système de mes Distilleries Eoliennes: par diminution de volume et refroidissement direct Fig. I ou par expansion adiabétique refroidissement direct Fig. II.

Comment fonctionne les Distilleries-Eoliennes par condensation de la vapeur d'eau contenue dans l'air atmosphérique Figs. I et II:

D'après ce que nous voyons ces deux figures I et II sont une élévation de l'ensemble de la Distillerie Eolienne consistant en une base (32) creuse, dans sa partie supérieure est installée une couronne dentée, coussinet d'assises et axials, qui font pivoter au moyen du moteur et du pignon le corps de la DistillerieEolienne qui est fixé à l'axe creux L(4) aux points (7) et qui traverse l'interieur de la base (32) guidé par les coussinets axiaux et d'assises (aiguille, rouleaux, et coniques. Même si tous ces axes sont calculés pour supporter chacun tous les efforts auxquels ils seront soumis pendant le travail de rotation de la Distillerie Eolienne (3) autour de son axe. La fixation au point (33) se fait au moyen d'un anneau de forme spéciale qui laisse le passage aux tubes concentriques et aux cables de la station metéorologique placés en (34).

La girouette ou timon (2) est suffisante pour orienter le corps de la DistillerieEolienne (3) et présenter sa section d'entrée perpendiculaire et opposée à la direction du vent, mais dans le cas où le système ne fonctionnerait pas: la petite girouette (1) de la station meteorologique envoie par des moyens électroniques, un signal au panneau de controle (22) qui met en marche l'ensemble moteur-pignon (8) et oriente l'ensemble (3) dans la position idéale pour recevoir le vent contraire.

Je ne revendique aucun système d'orientation puisqu'elle peut se faire par n'importe quels moyens connus et qu'elle se pratique dans les turbines Eoliennes courantes comme: pour girouette stabilisatrice (2) par motuer ou servo-moteur, controlé électriquement ou électroniquement au moyen de girouette (1) ou au moyen d'éoliennes extérieures (37) Fig. IV.

Le mécanisme: moteur, servo-moteur, couronne et pignon Figs. I, II et III peuvent se situer à l'intérieur de la base (32) plutôt qu'à l'extérieur (8).

La station météorologique nous donnera dans le panneau (22) de la cassette cabine laboratoire les renseignements suivants:

1) Vitesse du vent.
2) Direction du vent
3) La température sèche.
4) La température humide.
5) L'humidité relative.
6) La température du point de condensation.
7) Le champ de température de cet equipement est de -30° a +100C.
8) Avec commande par microcompresseur.

Si a l'endroit ou sont installées mes Distilleries-Eoliennes pour condensation la force moyenne du vent n'atteint pas les 3 m/seconde nous devrons employer alors mon système: Refrigération par absorbtion, nucléants et énergie solaire Fig. III avec la turbine auxiliaire Eolique (37).

Pour l'accumulation et réserve d'énergie quoique si les conditions de radiation solaire de l'endroit étaient suffisantes ce système se généraliserait dans le cas de vents supérieurs de vitesse moyenne. Ces Distilleries-Eoliennes seront toujours munies des pales (11) dans les positions des fig. I et II suivant le système de réduction de volume et refroidissment direct FIG. I ou celui d'expansion adiabatique et refroidissement direct FIG. II; Mais ces pales (11) dans le cas que nous décrivons FIG. III n'entrainera aucune transmission ni équipement. Celles qui effectueront le travail seront les pales auxiliaires (37) FIG. III.

Les nucléants s'injectent à pression, se pulvérisent, au moyen des diffuseurs (35) FIGS. I, II, III, IV sur toute la section d'entrée de façon à former un rideau que la force du vent projète à l'intérieur (3) de la Distillerie-Eolienne et la quantité de nucléant injecté est en fonction de la vitesse du vent (section X, vitesse de ma formule, Page 5) et ceci se controle à l'aide de la station météorologique (1), (2) et (34) et à travers le panneau dans le laboratoire (22) FIGS. I, II, III et IV.

Pour nous faire une idée de ce phénomène de nucléisation je donnerai l'exemple suivant: un mélange de IAG (IODE D'ARGENT) à 2% dissout en acétone et CIN o CIK produit jusqu'à 10:15 de nucléants par exemple, IAG, CINa, CINo la glace sèche etc; la proposition qu'elle contient après la condensation de l'eau ne dépasserait pas les limites permises pour l'eau potable, puisque par exemple, dans le cas de lag et CINa, CIK, l'eau de pluie normale ont jusqu'à un $20.10^{-6}$ p.p.m. de Ag. et dans l'eau que produit notre Distillerie-Eolienne, comme conséquence de la nucléisation cette proportion serait seulement de l'ordre de 20 et $200.10^{-6}$ p.p.m. de Ag. La concentration maximum permise suivant le service de santé des ETATS UNIS est de $50.000 \times 10^{-6}$ p.p.m.

Le rendement de mes Distilleries-Eoliennes par condensation dépend de plusieurs conditions dont les deux principales sont a) en relation avec l'air avant de pénétrer en elles-memes, d'un coefficient d'échanges des turbulences de la stabilité du vent ce qui ferait qu'au moment d'entrer dans la Distillerie-Eolienne l'humidité absolue soit inferieure aux moyennes obtenues par les stations météorologiques locales et b) qu'en conséquence de la diminution de vitesse dans l'interieur des Distilleries Eoliennes expansion adiabatique FIG II diminution du volume avec augmentation de tension FIG I ou rideau de nucléants dans le sens perpendiculaire à l'entrée de l'air dans la section de l'ouverture (3), dans la section de sortie de la zone réfrigérante (9) à travers les points de diffusion (36) FIG III.

Dans ce cas le rendement de ces Distilleries-Eoliennes serait:

1° De ma formule générale $Q = V \times S \times P_{hab.}$ multipliée par le coefficient $\Delta$ : $Q_{ob} = V \times S \times P_{hab.} \times$ étant = (a + b) 1. dans cette formule $P_{ob}$ = débit obtenu.

$\Delta$ = (a + b) qui sont les coefficients définis dans les paragraphes a) et b) et nous obtenons Q o b qui est le débit obtenu.

Les Distilleries Eoliennes des FIG I, II, III et IV sont pour les sections d'entrée de grandes dimensions (diamètres de plus de 3 mètres ou sections carrées, ou rectangulaires equivalentes à cette section circulaire). Une Distillerie Eolienne d'un diamètre de 30 m avec une humidité absolue de 12 grms m3 et une vitesse de vent de 25 km/heure et avec un coefficient $\Delta$ = 0,3 nous donne en 24 H une production $Q_{ob}$ = $S \times V \times P_{hab.} \times$ = 706 x 25.000 x 12 x 0,3 = 63.540.000 millimètre/heure = 63,54 m3/heure; 663,54 x 24 = 1,524 m3/jour ceci serait une distillerie type grand FIGS I, II, III, IV.

Ainsi, dans un endroit ou l'humidité alsolue est de 12 gr/m3 et une vitesse moyenne de 20 km/heure; S = .R2 = 3,1416 x 1,5² = 7,068 m2 et un diamétre de 3 m., Q = 20.000 x 7,068 x 12 = 1696, 320 ml.h = 1696 litre/heure = 1,696 m3/h; pour = $0,32_{ob}$ = 1696 x 0,3 = 508 litres/heure, 508 x 24 = 12,192 litres par jour. Ceci serait pour une Distillerie de type petit.

Dans l'Ile de Fuerteventura (Iles Canaries) au bord de l'eau, les mois d'octobre 1981, 82, 83 nons avons abtenu des humidités absolues respectivement: 17,6 grms/3, 17,8 grms/m3 et 18 grms/m3 a 13 H P.M. si cette Distillerie, au lieu d'etre installée sur terre ferme, sur le sol ou en haut d'un édifice, s'installait sur un bateau allant à 22 noeuds c'est-à-dire 39 Km/h = 39.000 m/n. Le coefficient $\Delta$ est plus favorable pour la Distillerie placée sur une embarcation puisque la vitesse est plus régulière, et toujours contraire à la direction de l'embarcation: $\Delta$ = 0,5.

Section de la distillerie-Eolienne S = 7,068 m2 vitesse 20 noeuds V = 39.000 m/h.

Humidité alsolue moyenne $P_{hab.}$ = 17,8 grms/m3, $Q_{ob}$ = 7,068 x 39.000 x 17,8 x 0,5 = 2.453.402 ml/h = 2,453 m3/h; en 24 heures $Q_{ob}$ = 2,453 x 24 = 58.872 m3/jour 58.872/200 litres/personne 1 jour = 294 personnes/jour - suffisamment d'eau potable pur une embarcation avec 240 passagers et 54 membres d'équipage. Pour un transatlantique de 1.000 passagers nons aurions besoin de 4 de ces distilleries pour utilisation et réserve.

Cependant dans un train qui marche à une vitesse de 100 ou plus Km/h nous devons employer toujours le cas FIG II avec hélices multipales, plus de 16 pales, pour que réduise la vitesse d'entrée de l'air. FIG II (11).

Dans les FIGS V et VI je décris mes Distilleries Eoliennes par condensation de petite taille pour etre installées dans de petits groupes d'habitation, sur le toit horizontal d'édifice, dans les endroits ou il serait difficile et couteux d'installer des canalisations d'eau. En Espagne, selon les résultats de l'enquete des Budgets familiaux qui a été élaborée en 1984 à l'Institut National de Statistique, plus de 400.000 c'est-à-dire 3,8% du total des foyers existants n'ont pas l'eau courante. Ces distilleries peuvent s'installer aussi dans des urbanisations isolées et groupe d'hotel et motels et aussi en bateau et train - (selon la Page N° 19).

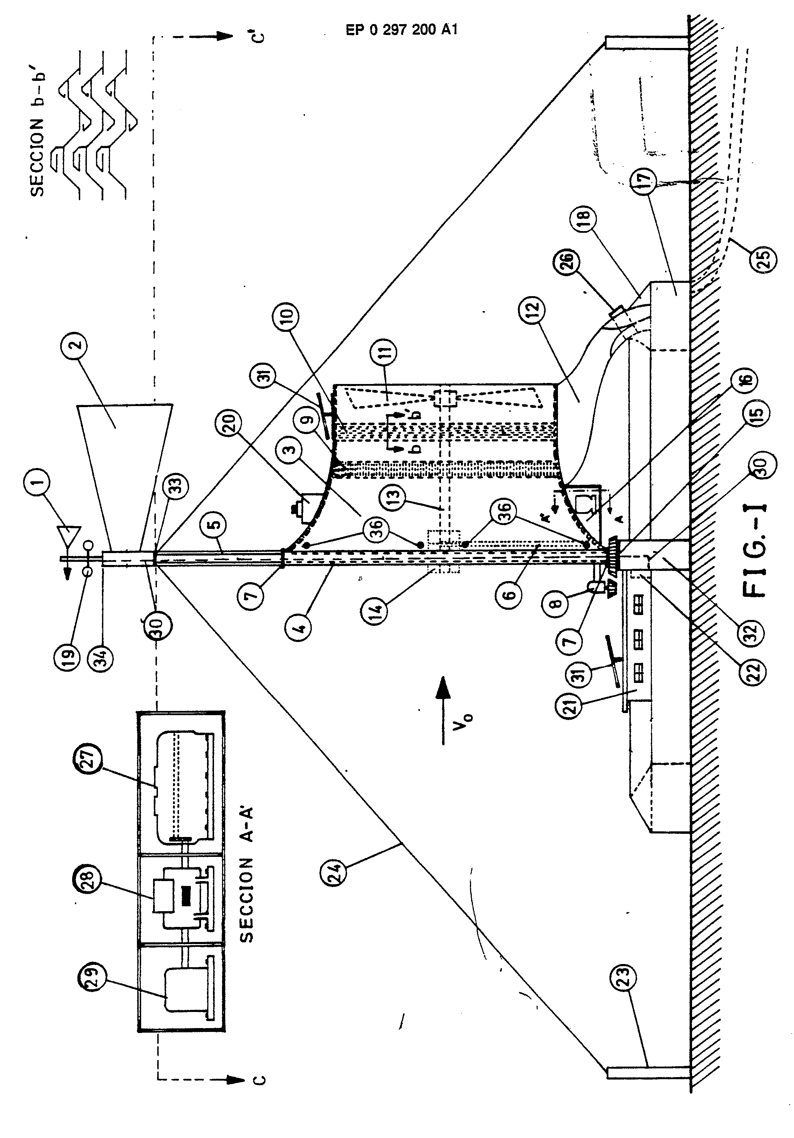

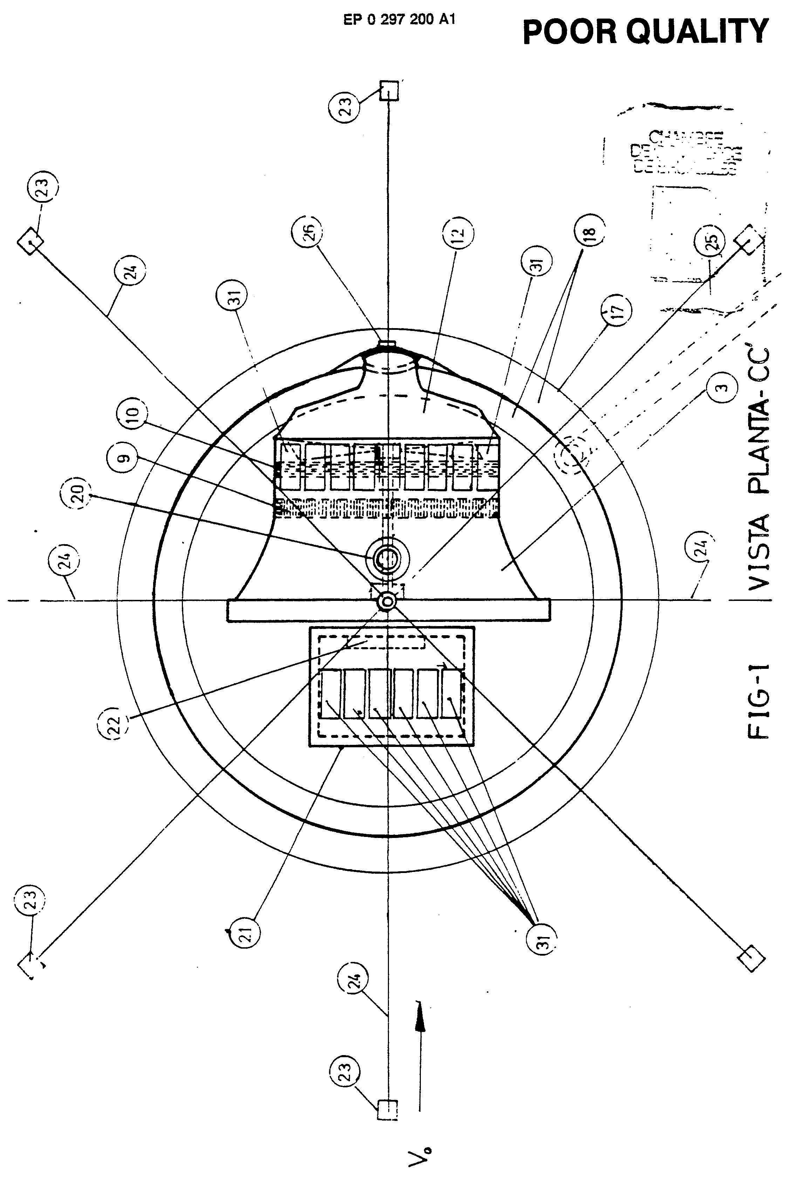

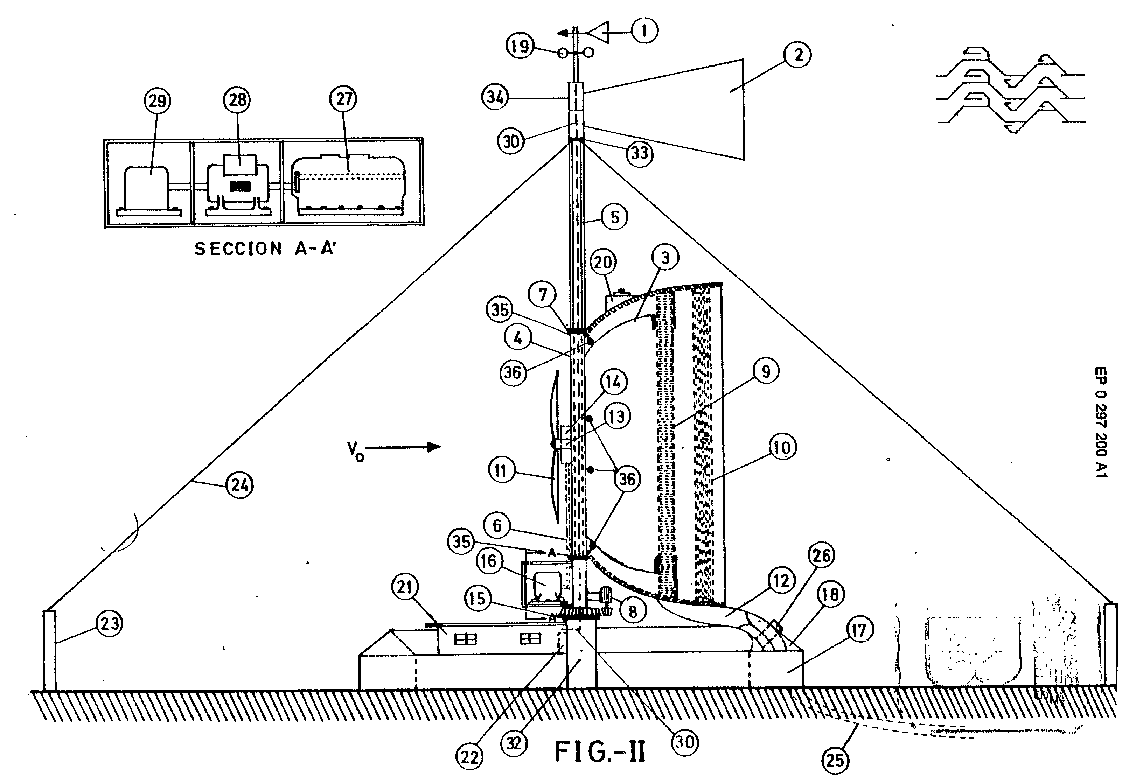

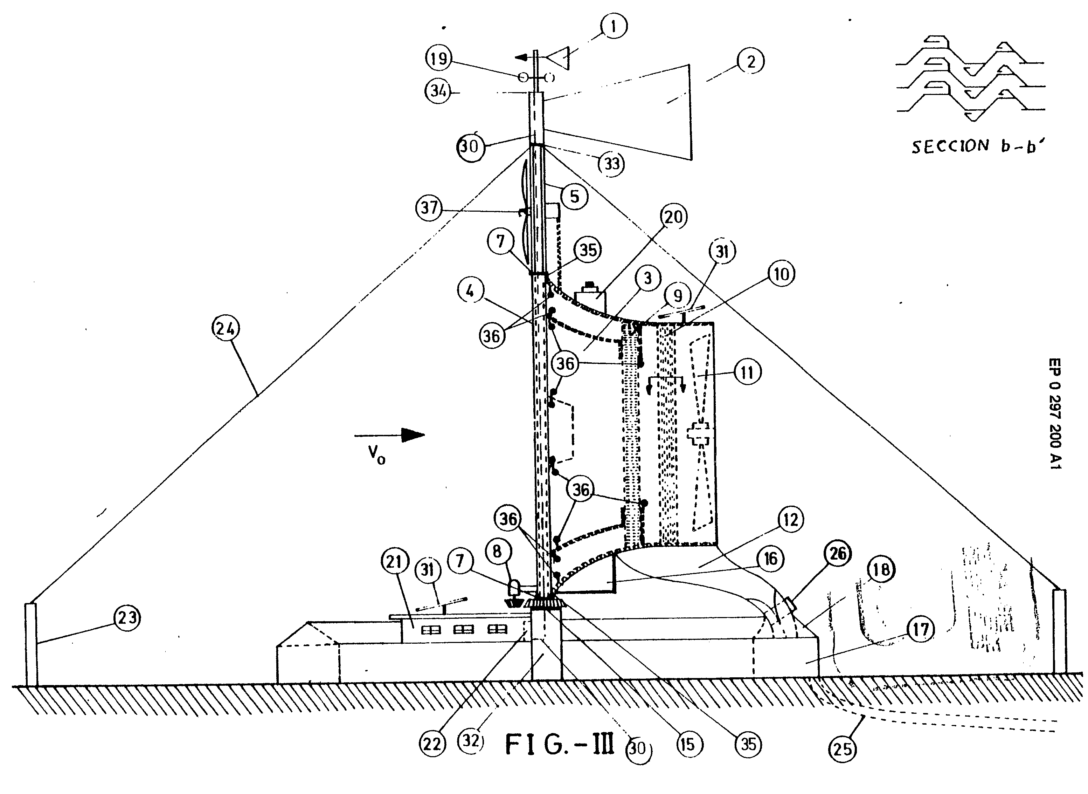

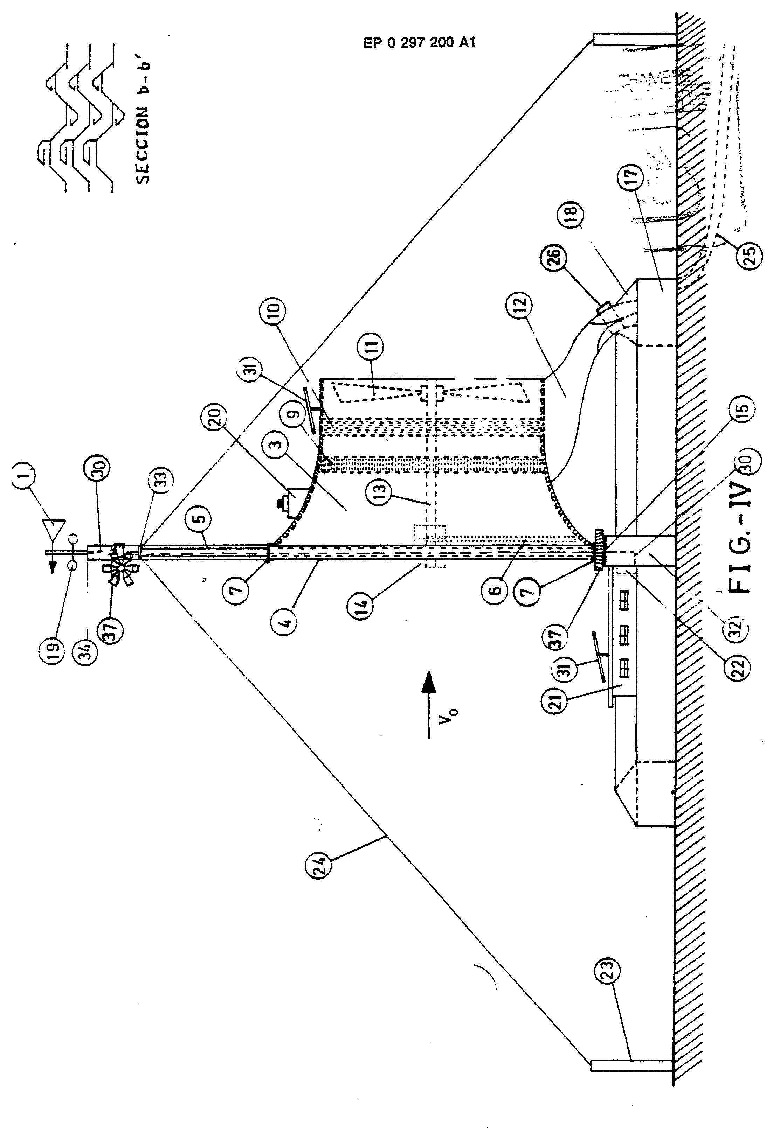

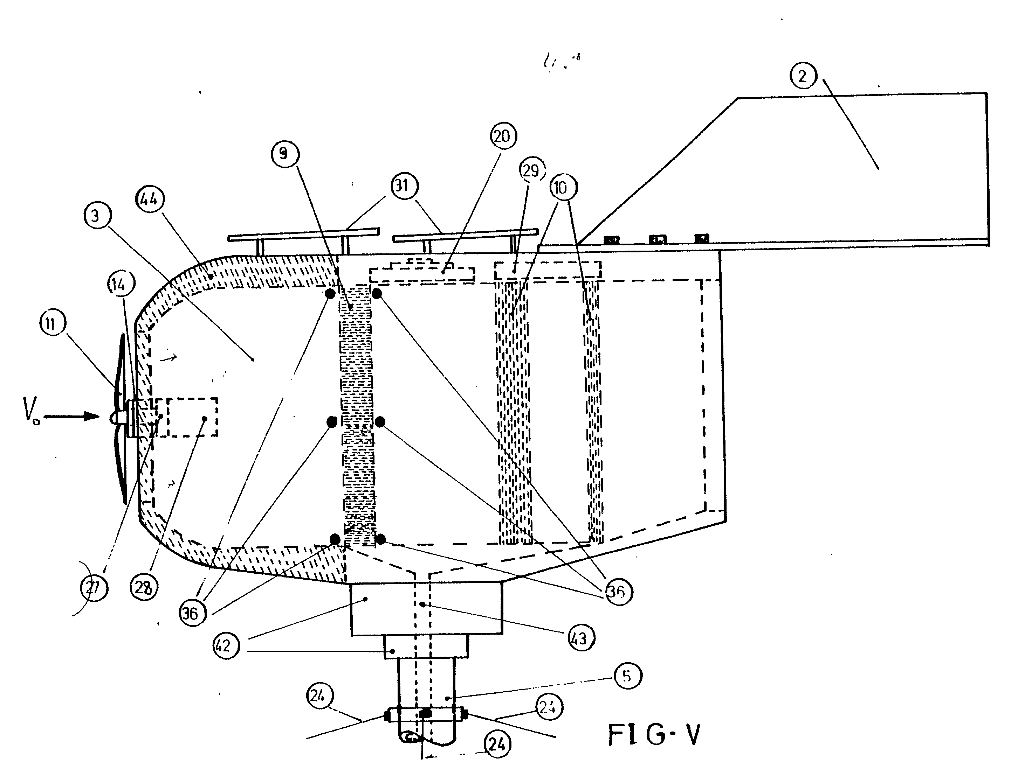

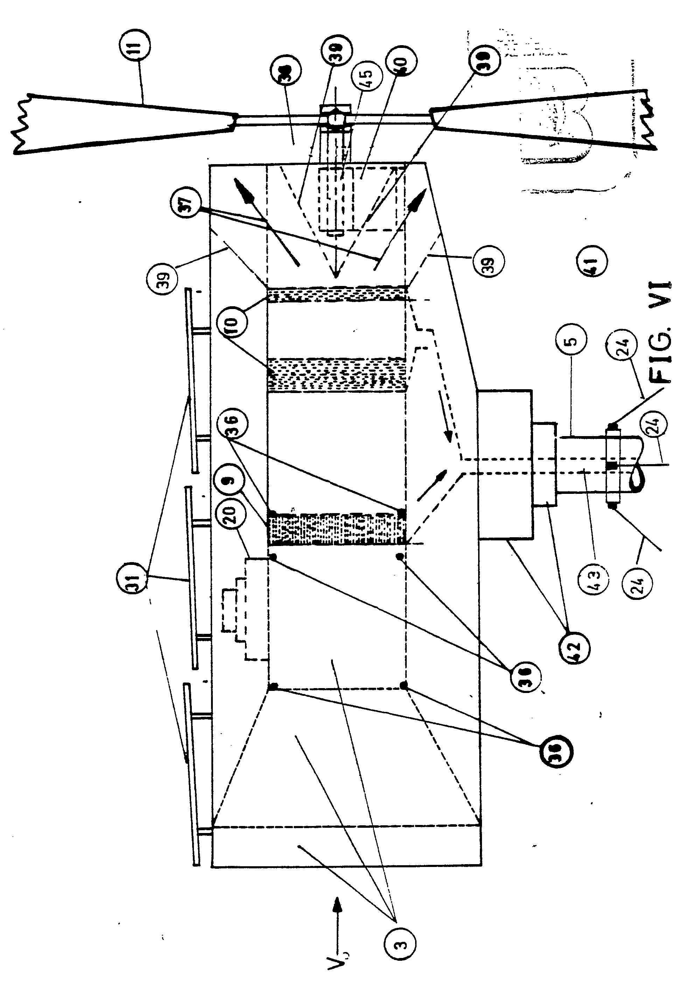

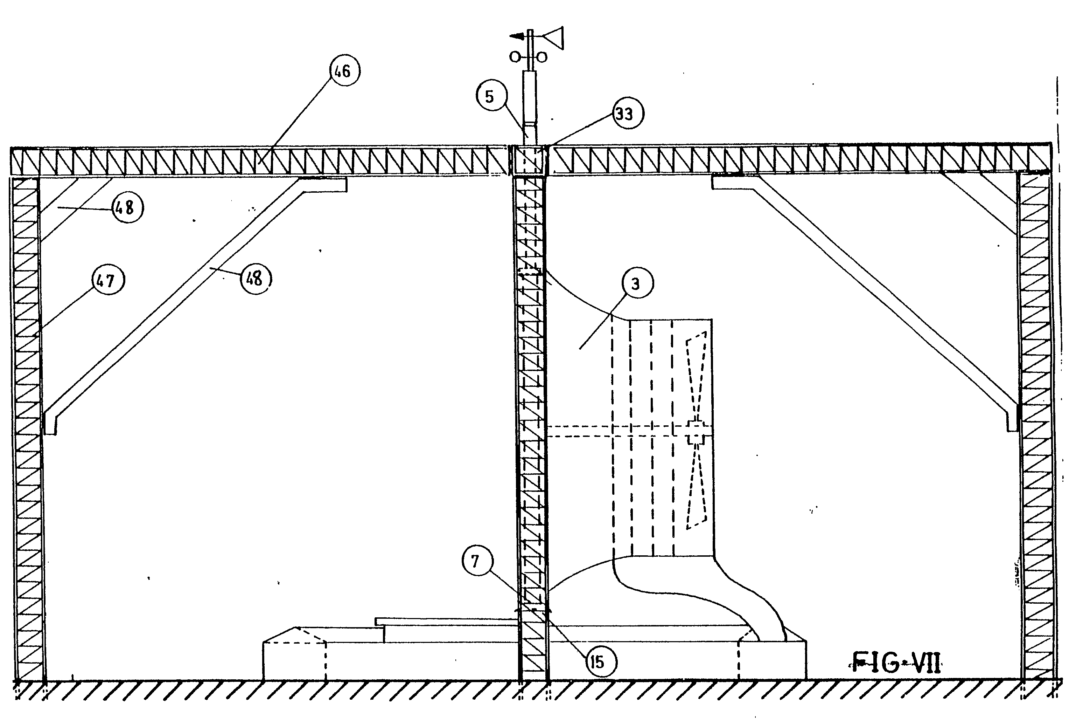

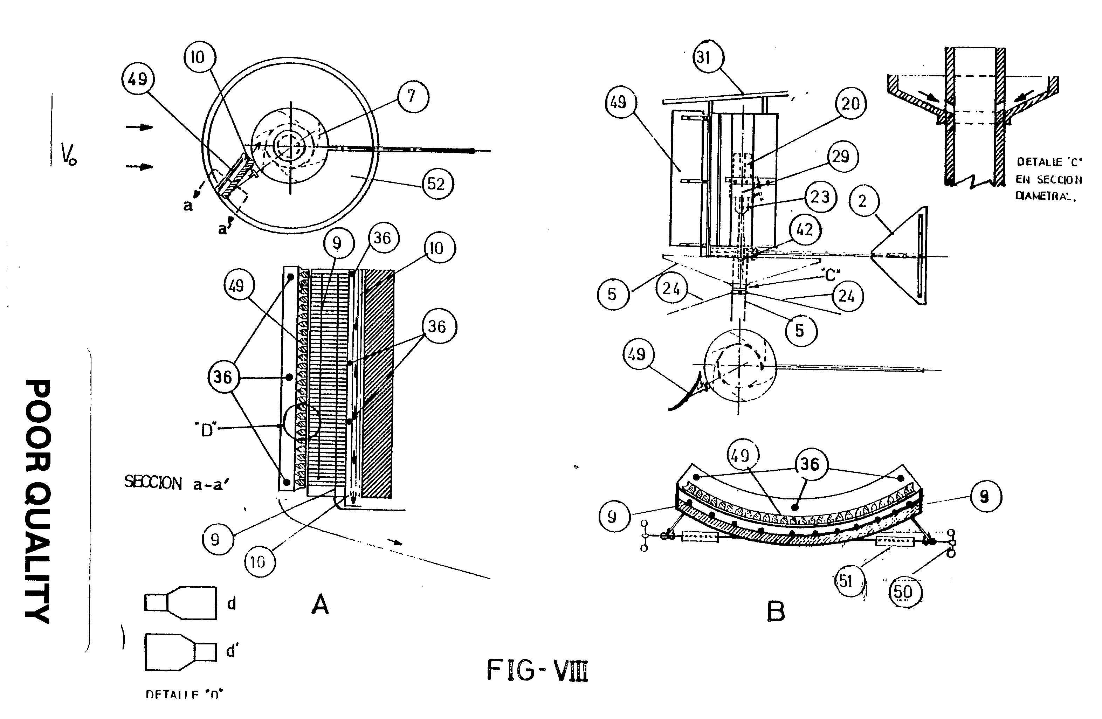

La figure V représente une distillerie-Eolienne par condensation par expansion adiabatique, refroidissement direct et si c'est nécessaire injection de nucléants. L'expansion adiabatique est obtenue par le principe de dépréssion qui s'origine par le passage de vent à travers les pales (11) FIG V, et à l'interieur de la zone d'expansion (3) la pression arrive à etre inferieure à l'atmosphère et donc experimente une diminu tion de température et continue à diminuer lorsqu'elle arrive à la zone (9) de refroidissement direct, si avec ces deux combinaisons nous n'arriverions pas, à la sortie de cette zone de froid, à la température de saturation de la vapeur d'eau, zone (9) FIG V, nons ferions agir les nucléants points (36) de cette figure, de façon qu'à la sortie de cette meme zone (9) soit déjà condensée l'eau de la vapeur d'eau, et descende par la partie inférieure de cette zone à la tuberie (43) FIG V et de là aux réservoirs ou de distribution. L'air qui suit la direction du vent doit passer à travers les zones (10) qui sont celles qui captent les gouttes d'eau qui sont en suspension dans l'air avant de sortir définitivement de la distillerie et cette eau de la partie inferieure va aussi sortir par les tuyaux (43) avec celle qui descend des évaporateurs (9).

Pour que la temperature se conserve constante dans cette zone d'expansion adiabatique zone (3) FIG. V, cette zone se trouve convenablement isolée avec des produits spéciaux (44) pour qu'ils assurent un coefficient K de transmission de chaleur, d'au moins : K = 0,5.

Les nucléants sont situés dans les réservoirs de distribution (20) et se diffusent au moyen des diffuseurs (36). L'unité de froid par absorbtion (29) prend l'énergie pour produirè la chauffage des réfrigérants. d'une part. du générateur (28) FIG. V qui reçoit les pales (11) le mouvement (r,p,m) à travers le mécanisme (24) et le multiplicateur de vitesse (27). Il reçoit aussi le complement de chaleur necessaire, par les dimensions que nécessite de refrigérant le système de réfrigeration par absorbtion d'unites de plaques d'énergie solaire (31). De façon à ce qu'à tout moment on ait l'équation suivante :

TR = Ta - Tf

Température extérieur ambiante = Ta

Température de l'air une fois dans la zone (3) d'expansion adiabatique = Tad.

Température en zone de froid (9) = Tf.

Température de saturation (rosée) = TR.

et le rendement de condensation optimum est quand :

Tad = Ta - 5$^{\circ}$C

Le type de Distillerie-Eolienne par condensation FIG V reçoit le vent de face sur les pales de la turbine éolique et l'orientation se fait au moyen de la girouette ou timon d'orientation (2) mais il peut s'effectuer aussi par n'importe quels systèmes existants, incluant ceux indiqués par moi-meme à la Page n$^{\circ}$ 16 paragraphe de 15 a 25. L'ensemble de cette Distillerie-Eolienne pivote et s'appuie sur les points (42) et se fixe par sa partie inferieure à la colonne creuse ou support (5) avec des coussinets axiaux, radiaux, et coniques dans l'interieur du support passe le tube de conduction de l'eau produite pour renforcer la stabilité de l'ensemble la colonne (5) est soutenue au moyen de cables tenseurs. (24)

Dans la figure VI je décris ma Distillerie-Eolienne de taille moyenne et petite par la condensation de la vapeur d'eau contenue dans l'air atmosphérique par dimminution de volume, augmentant la tension (voir Pages n$^{\circ}$ 7, 8 et 9) avec refroidissement direct. La turbine Eolique dans ce cas FIG VI est du modèle auto-orientable c'est-à-dire qui reçoit le vent $V_o$ derrière les pales et s'auto-oriente opposant la section opposée à la distillerie, au vent (selon la FIG VI) l'avantage de ce modèle est qu'il n'a pas besoin de mécanisme d'orientation, sinon qu'il le réalise avec les pales (11). Les caractéristiques principales de ce modèle est que le corps d'admission ou entrée d'air a trois compartiments comme on peut voir dans la FIG VI zones (3) et que les nucléants, s'ils étaient nécessaires, peuvent agir à partir de la troisième réduction du volume au moyen du dépot distributeur dosificateur (20) et des diffuseurs (36). La zone de froid (9) est égale a celle de la distillerie antérieure FIG V et reçoit aussi l'énergie de chaleur pour le système de refrigeration par absorbtion (40) FIG. VI du générateur multiplicateur de vitesse (r.p.m.) installé à continuation de la turbine éolique (11) et aussi des plaques solaires (31). Autre caractéristique spéciale de cette distillerie et que pour augmenter le rendement de l'influence du vent sur ses pales (11) l'air à la sortie, après avoir dépasser les zones de séparation de gouttes (10) se dévie à la sortie du corps de la Distillerie-Eolienne dans la direction des flèches (37) et des déflecteurs (39) jusqu'au commencement des pales (11) FIG VI. Le restant de cette Distillerie-Eolienne est la meme que l'anterieur c'est-à-dire la sortie de l'eau par les tubes (43) les éléments de rotation avec ses coussinets, axiaux, radiaux et d'assise sont coniques (42) de meme que la colonne creuse de support, et de conduite avec interieurement les tubes des eaux produites et le point d'amarrage des cables de stabilité de l'ensemble (24).

La FIG VII est une élévation des modèles des FIGS I, II, III et IV mais pour de plus grandes dimensions, supérieures à 20 ou 30 mètres de diamètre ou ses sections equivalentes carrées ou rectangulaires; et pour la production de débit d'eau supérieure à 1000 on 1500 m$^3$ jour - pour remplacer les eaux potables contaminées en zones industrielles, maintenir le niveau d'eau dans les barrages et ainsi augmenter le rendement des turbines de production d'énergie électrique et pour économiser les conduites, ou canaux de conduction d'eau (dans l'Ile de Teneriffe, Iles Canaries les eaux sont conduites dans des canaux ouverts sur 90 Km) et surtout en canaux ouverts de petite section de 1m x 2m; c'est-à-dire section de 2 mètres carrés de section et ensuite l'eau est conservée en cuves ouvertes avec la correspondante perte par évaporation ces zones qui sont à peu de distance de la mer avec des températures moyennes de 20 à 25 C humidité relative de 60 a 70% avec des températures de saturation de 11 a 17, 6$^{\circ}$C et avec de l'hummidité absolue de 9,85 à 15,52 gms/m$^3$. Serait un endroit idéal pour un grand modèle de Distillerie-Eolienne par condensation de vapeur d'eau.

La structure de substentation et stabilisation de ce type de Distillerie-Eolienne de grandes dimensions FIG VII est constituée par une armature de poutres légères d'acier (45) et colonne d'identiques caractéristiques (47) formant portiques avec la colonne centrale (5) de support et rotation du corps de la Distillerie (3) le nombre minimum de portiques est de 4 unités formant chacum avec l'autre un angle de 90$^{\circ}$ pour supporter les efforts latéraux, ces poutres (46) et colonnes (47) supportent des traverses (48) de dimensions prévues par calcul. Ce modèle de Distillerie-Eolienne par condensation remplacera avec avantage, non seulement pour le cout initial des installations sinon par l'entretien et production les installations de désalinisation de l'eau de mer, puisqu'au niveau de la mer la concentration de vapeur d'eau dans l'air atmosphérique est maximum.

Dans la Fig. VIII je fais une description de ce que j'appelle mini Distillerie Eolienne par condensation de vapeur d'eau de l'air atmosphérique individuel pour obtenir de l'eau potable pour boire et cuisiner dans de logements individuels qui sont situés dans des zones ou existent des coupures d'eau, surtout en époque sèche, ou dans les endroits qui sont fournis en eau provenant de la désalinisation, et qu'à la suite d'avarie des installations, les habitants doivent utiliser de l'eau mineral non seulement pour boire mais aussi pour se laver.

Dans ce cas les mini-Distillerie Eoliennes, une des méthodes les plus simples, pour n'avoir pas d'impératif de limite de vent ni de régularité est l'éolienne de SIVORNIUS FIG. VIII A et B à laquelle j'adapte ce que j'appelle des panneaux de condensation (49) dans les variantes A et B qui en meme temps sont celles qui remplacent la plaque déflecteur classique de cette turbine éolienne.

Le principe de fonctionnement de cette mini-Distillerie est le meme que j'emploie dans les grandes ou moyennes FIG I, II, V et VI c'est-à-dire que si l'air en pénètrant par (49) FIG VIII A et B le fait, en passant par la partie qui dans l'espèce de radiateur ou "ruche" (49) presenté rayé dans ce cas nous aurons une expansion adiabatique en pénétrant dans la zone (9) de refroidissement, qui est le cas de la FIG II; ou bien si l'entrée se fait par les zones non rayées (49) A et B FIG VIII alors pour entrer par le cone de plus grande section au cone inférieur, nous aurons une diminution du volume en passant dans la zone froide, et donc une augmentation de la tension comme c'est le cas de la FIG I.

Les nucléants sont situés en (20) FIG VIII et se sont dispersés dans la masse d'air qui entre dans la Distillerie au moyen des diffuseurs (36) l'énergie nécessaire au chauffage pour faire fonctionner le système de réfrigération par absorbtion situé en (29) nous la prenons, d'un coté, à travers le genérateur de courant situé en (28) FIG VIII qui à son tour est fourni en énergie par les pales (7) de l'Eolienne, et d'autre part des plaques d'énergie solaire (31) qui étant situées dans la partie supérieure de la structure extérieure de l'Eolienne s'orientera toujours avec le timon ou girouette (2) daus la direction du vent - Pour assurer la descente rapide de l'eau et puisque peut s'évaporer une partie de celle condensée dans les memes panneaux (49) FIG VIII ceux-ci portent dans les latéraux (comme indique la seccion de B dans cette meme figure) des vibreurs (51) dont les axes se prolongent à l'extérieur des panneaux de façon que se servant de pelles "cuillères" (50) (comme celle des anémomètres et qui pour étre toujours orientées, conme le panneau, contre le vent originent un mouvement vibratoire dans le sens longitudinal du panneau (49), faisant descendre plus rapidement l'eau de condensation produite vers le collecteur d'eau (52) et de meme à la canalisation (5) d'après l'indication des flèches de la section A de la figure VIII ce modèle de mini-Distilleries Eoliennes par condensation de la vapeur d'eau aura une grande application pour des usages individuels et une production de 25 at 250 litres d'eau/jour.

Une fois décrit les principes que j'affirme dans les Pages N° 2, 3, 4 dans les paragraphes 10 à 25, 25 et 5 respectivement et aprés avoir exposé les bases de mes Distilleries Eoliennes, je vais donner des chiffres qui démontrent que l'humidité absolue (grammes eau par m3 d'air) est la première source d'eau potable dont nous disposons - ainsi.

Si nous considérons le rectangle formé par la latitude Nord 60° et la latitude Sud 60° au total approximativement 11.350 Km. (petit coté rectangle) et étant le plus grand côté la longitude du globe terrestre, 26.594 Km. Ceci nous donne une section de 11.350 x 26.594 = 301.841 km2

Nons savons que l'air atmosphérique respirable c'est-à-dire la limite d'habitabilité humaine est à 5000 m. d'altitude à partir du niveau de la mer, mais je ne vais tenir en compte que seulement 100 mètres d'épaisseur qui sont ceux que je considère pratiques pour placer mes Distilleries Eoliennes par condensation, ainsi nous aurons un volume d'air utilisable de 301.841.000 x 0,1 = 30.184.100 km3 arrondissons a 3,02 x $10^{16}$ m3 volume total de la zone comprise dans ces limites est de 3,02 x $10^{16}$ m3 d'air atmosphérique.

Si nous tenons compte qu'entre la latitude Nord 60° et la Sud 60° la tension moyenne de la vapeur d'eau est de 15 milibares et la température moyenne est de 12° C au moyen de différentes formules et graphiques nons trouvons que l'humidité absolue moyenne, avec ces variantes de tension et température est de 11,4 gram/m3.

Donc le volume d'eau dont nous disposons est de:

3,02 x $10^{16}$ x 11,4 = 34.43 x $10^{16}$ grms/d'eau

C'est-à-dire que nous disposons d'une masse d'eau de 34.43 x $10^{10}$ m3 mais cette masse n'est pas immobile elle se déplace en fonction de la vitesse du vent (Page N° 5 mon théorème et formule du débit d'eau contenu pour la condensation de vapeur d'eau contenue dans l'air atmosphérique) et c'est lá ou je base mon principe pour obtenir cette source d'eau, profitant de cette "masse", son déplacement au moyen de sa vitesse, et employant des énergies économiques, comme la éolique et solaire, complémentant si nécessaire par des nucléants pour obtenir une façon pratique et économique la température de saturation ou (rosée) et condenser ainsi l'eau contenue dans la vapeur d'eau de l'air atmosphérique.

## Revendications

1o Une Destillateure Eoleinne pour l'obtention directe d'eau par la condensation de la vapeur d'eau contenue dans l'air atmospherique, d'une facon pratique, economique et commercial; compte tenue que l'air armospherique se déplace dans la direction du vent et est obligué de rentrer par un coté du Destillateure Eolinne qui par avant a etc orientó contre lui, etant obligé a penetrera l'interieure du Destillateure, celle-ci est pourvue des mechanismes neccesaires pour qu'elle change de direction authomatique et simultaneament avec le chagement de la direction du vent, de facon a le recevoir toujours de plein fouet; ca toujours qu'elle soit monteéestatiquement dans un lieur fixe, mais si elle est montee sur un element movil, c'est a dire un camion, un train, un bateau auavion dans cette moment elle será fixee et orientee toujours dans la direction du movement du vehide. L'air a partir du mament de rentrer dans la Destillateure-Eolienne jusqu'a sa sortie, subie une serie de changements fisiques similaires aux changements qu'il subie dans la nature pour avoir a obtenir la temperature du rosée et transformer sa humidité absolue dans la pluie, (lorsque son poids le oblige a descendre dans la forme de pluie). Avant de sa sortie du Destillateure-Eolienne, on recupere les grammes d'eau par metre cube, une fois condesee dans un recevoir approprié etavant méme sa sotie on recupere les goutes d'eau en suspension par moyeu d'un separateur de goutes, avec quoi on augmente le rendement du débit d'eau obtenué dans la conduit et dos les colecteurs.

Pour que les Destillateures-Eolennes soient autonomes, en cequi a cette energie sagit-il, et dans l'interior du , Destillateures, ainsi comme dans l'exterieure ils vont montee les mecanismes neccesaires pour obtenir que l'air avant de s ortir il aurai laisseé dans l'interieur du Destillateures l'eau contenue dans la vapeur d'eau avant de rentrer dans la meme,et ceci, pour avoir recontrer dans l'interieure du apareille les conditions neccesaires (temperature absolue o derosée) moyenant la quelle cette vapeur d'eau contenue dans d'atmosphere exterieure, se condence et elle va sortir en forme d'eau par les collecteur et conduits, qu'ils font partie de la meme, et par moyene de dites collecteurs et conduits elle arrive aux depots o recervoires, pour apres la distribué. Les changements phisiques que subi l'air dans l'intereure de la Destillateure avec le propos d'obtenir la temperature de saturation et le faire avec un minimum d'energie de facon a obtenir un prix de reviant competitive, ils sont:

a) Pour une expansion adiabatique qu'elle arrive quant l'air a passé les palles de la turbine eolinne qui se trouve situedans le plan frontal ou de la rentreé du l'air a la Destillateure, dans cette moument il y a lieur a une diminution de presion accompagné d'une augmentation du volume, la pression elle arrive a etre inferieure al l'atmospherique, ceci origine une descente dans la temperatureure d'air dans cette moument l'air recoive une melange intime avec des nucleants les queis originent une aceletation pour la condensation du l'eau contenue dans le vapeur d'eau du l'air. A continuation et toujours dans l'interiure de l'apparreille, l'air traverse la zone froid et la nous completons le cicle de refroidissemente, de cette air, jusqu'arriver a la temperature de saturation o de rosseé et cela l'obtenons pour refroidissemente et dans cette moument on botient la condensation de la plus partie du l'eau contenue dans la vapeur d'eau de l'air qui a rentreé dans la Destillateure. Cette refroidissemente on l'obtien: moyemant l'energie eolienne qui produisse le vent sur les páles de la turbine eolienne en le cedant sa energie cinetique lequel faites marcher des generateurs electriques qui par la chleur des resistences font marchar un systeme de refroidissemente par absortion, o u autre, avec quoi on obtient dans l'interieure de la Destillerie le complement de diminution de temperature pour arriver a la temperature saturante o u de rosse. Cette apport de l'energie eolienne est aideé et augmenteé par l'apport de l'energie solaire par le moyennedes pann aux photovoltaiques plasseé a l'exterieure de la Destillerie Eolinne, avec quoi l'air rentree dans la Distillerie Eolinne, du a l'expantion adiabatique, a l'adition des nucleants, au refroidissement de l'air par l'energie eolinne generateur electricité-groupe d'absorption et l'energie solaire capteé par les pannaux fotovoltaiques on obtient une condensation du vapeur d'eau contenue dans l'air a sa rentré. Avant de sortir cette air traverse des pannaux de separation, de façon a augmenter le rendenent dans l'obtention d'aeau. Cette systemmne je l'appelle: d'expantion adiabatique, nucleation et refroidissement directe.

b) Cette systeme l'air a la entreé de la Distellerie Eolinne au lieure d'experimenter une expansion adiabatique comme celui de, a) il experimente une diminution de volume avec une augmentation de tension dans la vapeur d'eau qu'il contiente restant tous les autres fenomenes comme dans le cas precedent a), a exception que la turbine eolienne se situe a la sortie de l'air de la Destillerie au lieure de a la rentreé comme dans le cas precente a), et inmediatament appres le separateur des gouttes.

Cette systeme je l'appelle: "de condensation du vapeur d'eau contenue dans l'air atmospherique par diminution de volume et augmentation de la tension du vapeur d'eau, nucleation et refroidissement directe".

c) Pour des grandes unites de production d'eau on l'obtients pour les deux systemes a) oy b). plassee en batteries et employant commme refroidissant le cicle d'absortion et comme absorvent le bromure de litio ou la sel commune, sans qu'ils soit exclusives, et on pourra employer des autres sels qui soient plus economiques dans les endroits d'application et ça dans unites de 100. 1.000 ou plus des tonnes de refrigeration. Pour ces granders qui on peus les placer dans des platteformes type off-shore ou an terre et comme complemant d'energie si necessaire on pourrá employer l'energie nucleaire, en obtenant de l'eau a un prix inferieure a celui obtenue par le systeme conue comme desalinisation de l'eau de mer.

2o.- Les Destillateurs Eolinnes du revendication 1o dans la quelle l'air une fois orienteé la Destillateur contre la direction du vent, par les divers mechanismes decrites dans la memoire, elle situe sa surface, la plus grande, contre la direction du vent, qui cette soit une section tronc-conique, piramidale ou autre, mais toujours de differente section de rentre et sortie. La rotation se fait sur un axe qui se situe de façon a equilibrer l'ensemble. L'axe sur lequel faites la rotation sera supporté par des roullements radiaux et axiales et il sera etayeè par des cables ou des estructures metalliques, ça dans sa partie superieure. La partie inferiure de la Destillateure sera ancreè a terre ou dans des platteformes (off-shore). a des bateuax. des batiments des camions, mais toujours avec des appuis sur roullements de façon a faciliter sa rotation.La partie inferieure sera munie des conduites ou tuyaux de façon a decharger l'eau produite dans la Destillateure pour appres la verser dans des cannaux circuleures de façon a possibiliter sa decharge quelque soit le point cardinal dans lequel est orienteè, en cette moument la Destillateure, c'est a dire. dans des canneaux circulaires concentriques par rapport a l'axe de rotation, car la decharge se faites simultanneè et continue pour calculer le debit ou production d'eau, on place, ayant la decharge, un compteur d'eau le quel transmettra le volume d'eau produites à l'estation du control des canneaux collecteurs ont une fermeture en cahoutchouc, ou outre material sintetique elastique, de façon a laisser passer passeur la conduit de decharge dans le moument de son passage par le point cardinal a cette instant. mais le reste du canal est fermè pour eviter de l'evaporation de l'eau produittes. Par un d'enivellement dans les fonds des cannaux on faites la captation par des conduites qui amenent l'eau aux recevoires de distribution ou des estokages.

3o.- Les Destillateurs Eoliennes par condensation du vapeur d'eau conter dans l'air atmospherique des revendications 1a et 2a dans la quelle on intale sur l'axe principal de rotation et substentation et dans sa partie la plus haute une station meteorologique ou, pour le moins, est installe: un grand timon ou gironeἰt sa superficie etant en fonction des dimensions de la Distillerie qui est d'autoorientation pour une vitesse determineè du vent. ceci va unie au corps de la Destillerie par un tube concentrique, avec son axe principal de rotation et de stabilité, cette axe est soutenu et guidé par des roullements d'assise et radiaux, des roulaux coniques et d'aiguilles, fera pivoter avec le vent le corps de la Distellerie a partir d'une certaine vitesse de celui-ci, s'il n'etait pas suffisant, a ce moment là agire la seconde gironette ou timon de la station méteorologique pour les mecanismes electrique-electroniques, hydrauliques et cecaniques. fait fonctionner le système pignon-couronne faisant pivoter l'ensemble de la Distillerie pour l'orienter avec l'entreè de l'air opposeè a la direction du vent. Le système d'orientation peut ètre aussi commandè par des servo-moteurs. et par le moyen de deux turbines eoliennes auxiliaires aux cotès de la Distilleries et perpenticulair et opposees au corp de la meme.

Les stations meteorologiques palaceis dans la partie superieure du mat principae des Distilleries, cornporterant, au moins, des appareils de mesere.

1- La vitesse du vent

2- Direction du vent

3- La temperature seche

4- La temperature humide

5- L'humidite relative

6- La temperature au pairtde condensation

7- Le champ de temperature de at equipment etant de -30° C a + 100° C -

8- L'enseble avec commande par micro-computeur. qui en meme temps donnera a chaque instant.en digitales, le volume de l'eau produte, et controle par les compteur ou onmesure le debit. places a la sortie des Distilleries.

Tout ces reseignement se regroupent sur le panneau de control que se trouve dans la cabine Laboratoriore de chaque Distillerie. o se controle aussi la dosification de nucleants et les temperatures interiures de chaque zone de la Distillerie.

4- Les Distillerie Eoliennes par condensation des revendication 1a., 2a., et 3a. pour petites et moyenes capacites de condensation. qui sont celles qui sont placees sur les reservoirs d'eau sureleves pour les urbanisations. ensemble de petites villas, edifice d'une certaine importance, embarcations. trains, et surtont dans le endroits ou les eaux sont contaminees ou si il n'existe pas de controle fiable. Ces distilleries sont

12

decrites dans le memoire et la revendication 1a. a) et 1a. b) mais dans le cas de petites et moyennes distilleries dans cette revendication 4a. dans la a) il faut ajouter la variante suivan cette: que le corps de la Distillerie es place sur un support, FIG.V qui assure le monvenment de rotation et d'orientation en fonction de la direction du vent, et qu'au moyen d'un systeme de rotules et de coussinets coniques, de pousseé, de rouleaux et d'aiguilles assurente l'astabilité du corps de la distillerie sur son support qui se prolonge jusqu'en bas au moyen d'un colonne creuse, qui en meme temps qu'elle les tubes qui collectent l'eau produite dans la zone froide ou de saturation et celle recupereé de l'air avant d'etre capté par les separateurs de gouttes ces tubes ont un embranchement special hermetique qui l'unit au collecteur des eaux produits, de facon, de permette a celui-ci de p privoter avec l'ensemble de la Distillerie.

La Turbine Eolique etant situeé sur la partie frontal du crops de la Distillerie, necessite, que ce corps dans sa partie frontal u d'admission d'air, ait une ouverture a pen pres egal au diametre des pâles de la Turbine Eolique, et dans le crops interrieur de la Distillerie le diametrede la zone d' expansion adiabatique doit etre ( a une distance des pales de 25% de leurs diametres) d'un diametre des interieur suprieur a un 50% au diametre des pales, continuant avec ce meme diametre jusqu'a la zone froide ou de saturation. FIG. V Comme cette expansion, entre la partie extirieure de la Distillerie et a l'interieur, elle doit etre adiabatique et t tont le long de cette zone d'expansion, entre la partie extriere de la Distillerie et a l' interieur, elle doit entre isollé de facon que le coefficient de transmission de chaleur de la carcasse soit au moins sur l'axe meme de la turbine, mais ils doivent entre isoles aussi puisqu'ils se trouvent dans la chambre d'expansion (K = 0,5) pour ne pas apporter de chaleurs a cette zone ou bienilsepenvente entre palaces, au moyen de transmiosions a'l extrier de la carcasse de la Distillerie. Dans la zone d' expansion s'inecte aussiles nucleants. Les plaques solaires sont places sur la partie superrieur de la Distillerie. La orientation de cette Distillerie se fait a traves d'un "Timon" ou gironette qui est situé dans la partie superriere arrier de la carcasse.

La revendication 4a variante b) a en relation avec les Distilleries du modéle a) les variantes suivantes:

L'ensemble du corps de la Distillerie pivote dans sa partie infrieure de la méme façon que l'anterieure-(b) mais c'est le type de d'eoelinne auto-orientable, c'est a dire, que la turbine eolique se se place derriére le support de rotation et s'oriente automatiquement dans la direction du vent au moyen de ses pâles, comme si ç'eta une gironette, donc la partie opposeé aux pâles de l'eolienne est celle par oú rentre l'air dans les Distilleries de ce type FIG. VI), l'air en entrant en elle, le fait par cette fáce de la Distillerie qui presente sa plus grande surgace, dans le but qu'il passe graduellement au moyen d'une section conique, de façon que la prochaine section que rencontre l'air dans cette zone de diminution de volume ait une section qui peut étre de 20 a 50% plus petite que la section principale ou d'entreé á la Distillerie, cette section dans cette poi avec cette reduction continue uniforme jusqu'a l'arriveé de l'air dans la zone froide ou de condensation, c'est á dire, que la zone de diminution de volume et nucleation de cette type de Distillerie a trois sections differentes avante d'arriver a la zone de saturation, dans ce trajet nous augmentons la tention de la vapeur d'eau contenu dans un volume determiné par l'air entrant dans la Distillerie Eoliene en fonction du vent.

Une autre variante de ce systeme de Distillerie est que le genrateurs e le multiplicaters de vittesse sont placés sur le prolongement de l'axe de l'eolienne et dans la zone de sortie vers l'exterie de l'air par la partie arriere de la Distillerie et ensuite de la zone des panneaux de captation des gouttes d'eau en suspension del air avant de sortir de la Distillerie. Cette sortie definitive de l'air ne se fait pas vers l'axe de l'eolienne, placée derrière la Distillerie, mais le fait a travers un deflecteur en forme pyramidale, dont la base est situèe arrière de la Distillerie et le sommet vers les separateurs des gouttes, ce qui evite que l'air de sortie touche le generateurs et multiplicateurs de vitesse, aussi que, l'ailes des pàle , et qui font qu'au moyen d'une autre piece de cotes paralelles, mais dont la section est egale a la section de sortie des separateurs des gouttes, et au moyen d'ouvertures situeès sur l'armature de la Distillrie, l'air de sortie se dirige vers le debut des pàles de la turbine eolique. (sens des flèches dans la FIG. VI). Le reste de cette Distillrie qui est de : diminution de volume, augmentation de la tension du vapeur d'eau de l'air qui pénétre dedans la Distillerie, en fonction du vent, l'emploi des matieres nucleantes et refroidissement directe, le rest, est egal a la revendication dans la 4a. a), du paragraphe ananterieur.

5me.- Les Distilleries Eoliennes par condensation du vapeur d'ea contenue dans l'air atmospherique des revendications 1a, 2a, 3a, 4a mais losrsque c'est pour s'appliques a des mini-distilleries de celle que j'appelle individuelles oy mini, et qui ont une capacité journaliere d'obtetion d'eau de 25 a 250 litres, elles seront constitueés dan ce cas de panneaux condensateurs, dans lesquels d'une maniere compact et reduite, ont fait suivrea l'air, en fonction du vent, les memes phnomenes des revendications 1a a la 4a, c'est a dire, se retounvent en elles les deux systemes: expansion adiabatique, et celui de diminutio de volune avec la correspondante augmentation de la tension de la vapur d'eau contenu dans l'air atmospherique qui rentre dans la Distileire ainsi que la nucleisation, refridiosement direct, et separation d gouttes contenues dans l'air avant de sortir en de hors du panneau de condensation. Les panneaux peuveant, de plus, s'il se trouve sur place une source electrique economique, se monter sur une structure consistant en supports avec colonne, et mecanimes de rotation, comprenant la gironette ou timon pour qu'elle soriente et presente sa superfici d'entree toujours opoosee a la direction du vent. Ces panneaux, selon le voir la FIG. VIII de la memoire precedant, ils peuvent etre de deu façons A etB. L panneau A est de superficie plane et peuve etre de section rectanguliere, carreé ou circulaire. Mais dans tout les cas elle portera toujours une bordure de environ 10 centimetres tout au tour de sa bordure comme minimun et que sera plus longue en fonction des dimentions des panneaux. Dans cette guide d'entreé de l'air vont places les disperceures des materiaux nucleantes de condensation, de façon que l'air une fois melangeé avec les nucleantes traverse une ruche-panneau et avec la condition que cette panneau-ruche quand le systeme de condenstion est pour augmentation du volumen-expantion adiabatique les creus des ces panneaux-ruche sont tronc-coniques et presentant sa base inferieure a la entrée du l'air et la plus grande a l'interieure de la Distellerie et en se prolongeant tout le long comme on peus voire dans la memoire precedant FIG VIII detaille D. Acontinuation l'air penetre dans la zone de refroidissement directe lequelle estructure est traverseé par les tuyauteries du froid produit par le systeme gene ratear-groupe de compresion ou de absortion. Dans le moument de sortir de cette zone du froid directe l'air passe par les separateures des gouttes avante de sortir au espace a nouveau en laissant les gouttes en suspension dans le collecteur d'eau pour la partie inferieure de la Distillerie comme les revendications 4a a) et b). Quand le systeme est pour diminution du volumen et augmentation de la tension de la vapeur d'eau contenue dans l'air atmospherique ont emploi le mechanism decris mais seullement les creus des panneuax-ruche dans cette cas presentent sa surface la plus grand a la entre du l'air.

Les revendicationes 4a et 5a pour les quelles les panneaux de condensation vont monteé dans les eoliennes verticaux type Savonius et que le dite panneaux de condensation de la vapeur d'eau contenue dans l'air atmospherique soit installeé en formant un angle determineé avec l'axe de la girouette de façon qui l'air une fois sortie du panneu de condensation et apres son passage par les separateurs des gouttes situés a un coteé choc avec les lames de la turbine eolienne de façon qui les panneaux pas sellement sert pour condenseur la vapeur d'eau mais aussi pour augmenter le rendement cinetique de la turbine eolienne. voir FIG. VIII. Le generateur va monteé dans l'axe central de la tubine eolienne le meme que le systeme de production du froid et le recervoir des produites nucleants ou ces deux vont monteé dans le chassis avec le support de la girouuette d'orientation de la turbine eolienne et le panneau de condensation. les panneaux solaires ou photovoltaique on peus les monteur aussi sur cette chassis or separée de la tubine eolienne et tranmetre la energie elctrique par calbes au generateur.

6me.- Par le calcul et l'etude des Distillateurs Eoliennes pour la condensation de l'eau contenue dans la vapeur d'eau de l'air atmospherique des revendications 1a., 2me., " 3me.,4me., et 5me. personne jamais aucun teoremme et non plus aucun formule pour calculeur le debit de l'eau qui on peus obtenir dans une surface determinée en function de la direction du vent perpendiculeur a la dite surface et a sa vitesse; moi je reclamme comme mien cette formule et cette theoremme annoncée dans la memoire precedente dans la page 5me. et pour la quelle "LE DEBIT D'EAU QUI ON PEUS OBTENIR AU PRODUIRE DANS UNE DETERMINEE QUANTITE DE L'AIR QUI TRAVERSE UNE SURFACE SITUE PERPENDICULAIRMENTE A LA DIRECTION DU VENT AVEC LA QUELLE SE DEPLACE LE DITEAIR ET AVEC UNE VITESSE DETERMINEE ET EN FONCTION DE SA HUMIDITEE ABSOLUTE, ES EGAL A LA VITESSE DU VENT EN METRES PAR HEURE MULTIPLIEE PAR LA DITES SECTION EN METRES CARRES ET MULTIE PARA LA HUMIDITE ABSOLUTE MESUREE EN GRAMMES AU METRE CUBE." DANS LAQUELLE EN APPELANT "Q" A CET DEBIT ELLE NOUS DONNERA EN MILILITRES/HEURE.

$$Q = V \times S \times P_{hab.}$$

Et le rendement des Distillateurs Eoliennes par condensation du vapeur d'eau contenue dans l'air atmospherique dans un endroit determineé = a b 1, dans lequel a est un coeficient de changement turbutent de la stabilitée de l'air avant de entrer dans les Distiliries Eolinne et b est un coeficient enfonction du retardement comme consequence de la diminution de la vitesse de l'air dans l'interieure de la Distillerie. car toujours elle sera inferieure a son deplacement exterieure

7me. "UNE DISTILLERIE EOLIENNE POUR L'OBTENTION DIRECTE DE L'EAU PAR CONDENSATION DE CELLE CONTENUE DANS LA VAPEUR D'EAU CONTENUE DANS L'AIR ATMOSPHE-RIQUE".-

Revendications modifiées conformément à la règle 86(2) CBE

PREMIÈRE.- PROCEDE ET MACHINE EOLIENNE SOLAIRE POUR L'OBTENTION DIRECTE D'EAU PAR CONDENSATION DE LA VAPEUR D'EAU DE L'AIR ATMOSPHERIQUE, pour la production continuelle et industrielle d'eau, où l'air atmosphérique, qui se déplace dans la direction du vent, et qui en même temps contient et transporte toute l'eau du cycle hydrologique, pénètre par la partie frontal de la machine qui a été orientée auparavant contre la direction du vent au moyen de méchanismes déjà connus, et qui est caractérisé par le fait que l'air à l'intérieur de la machine, et soumis alternativement à:

a) une diminution de volume et une augmentation de la tension de la vapeur d'eau.

b) une dépression et une expansion adiabatique, et reçoit ensuite par injection des facteurs "nucléants" - aérosols - qui accélèrent la condensation et passe,après à une zone d'évaporateurs - de l'unité frigorifique qui fait partie de la machine- où l'air atteint la température de condensation et la plus grande partie de la vapeur d'eau se condense en traversant cette zone, ce qui fait que l'équivalence en eau produite de cette façon tombe au fond de la machine (FIG.I); l'air, afin d'en extrraire l'eau qui y est encore en suspension avant de sortir à l'extérieur, passe par des séparateurs de gouttes(FIG. I no 10) qui sont situés après la zone des évaporateurs est l'eau est recueillie dans le même collecteur que celui de la zone des évaporateurs.

DEUXIÈME.- MACHINE dáprès le procédé qui fait l'objet de la première révendicationet qui est caractérisée par le fait pour produire le potentiel frigorifique nécessaire à l'unité frigorifique, elle comporte une turbine éolienne actionnée par l'air qui entre dans la machine et des plaques solaires fotovoltaïques placées de telle façon que les deux énergies s'ajoutent pour atteindre la température de condensation dans la zone des évaporateurs.

TROISIÈME.- MACHINE qui conformément à la 1ère et 2ème révendication est caractérisée par le fait que pour produire la diminution de volume et l'augmentation de la tension de la vapeur d'eau citées, la tuyère d'entrée d'air dans le corps de la -machine a une forme tronconique dont la section la -plus grande est située face à l'entrée d'air et que la turbine éolienne est installée sur le train arrière de la machine, du côté opposé à l'entrée d'air et avant la sortie de ce dernier vers l'extérieur.

QUATRIÈME.- MACHINE qui conformément à la 1ère et 2ème révendication, est caractérisée par le fait que, pour produire la dépression et l'expansion adiabatique citées, la turbine éolienne est située sur la partie frontale d'entrée d'air de la machine dont la forme est tronconique mais dont la section la plus petite est située en face de l'entrée d'air.

CINQUIÈME.- MACHINE qui, conformément à la première revendication, est caractérisée par le fait que le ou les collecteurs de récolte d'eau obtenue se déchargent instantanément dans un récevoir en forme de couronne circulaire de façon à ce qu'il puisse recevoir directement et instantanément de ce ou de ces collecteurs, toute l'eau produite, quelle que soit l'orientation de la machine par suite des directions des différents vents(qui -peuvent être n'importe lesquelles de celle qui existent dans la rose des vens) (FIG.I 12 et 17).

SIXIÈME.-MACHINE, qui, conformément à la première revendication et caractérisée par le fait que le fond du récevoir de récolte d'eau dans des machines aux grandes dimensions, a une ou plusieurs dénivellations pour qu'elle se déchargent dans un ou plusieurs conduits, de façon à ce que celui-ci ou cex-ci transportent les eaux obtenues aux endroits de consommationou aux réservoirs généraux et que ce réservoirs de récolte a sur sa partie supérieure une soupape de fermeture en caoutchouc ou en tout autre matériel synthétique flexible pour ne laisser passer que le ou les tubes collecteurs(FIG. I plan CC'. détail 18)

SEPTIÈME.- MACHINE qui, conformément à la première et sixième revendications, est caractérisée par le fait que le collecteur ou les collecteurs de chaque machine, ont à leur extrémité avant de s'introduire dans les réservoirs un compteur ou débit-mètre pour contrôler la production d'eau(FIG.I, détail 26).

HUITIÈME.- MACHINE EOLIENNE SOLAIRE, objet des revendications précédentes, qui est caractérisée par le fait que qu'ant il s'agit de plus petits modèles, elle est montée sur des éléments tubulaires qui lui servent de support là où les collecteurs d'eau sont concentriques et à l'intérieur de ces supports (FIG. V et VI, détail 43).

NEUVIÈME.-MACHINE éolienne solaire, objets des revendications précedentes, pour l'obtention d'eau par condensation de la vapeur d'eau de l'air qui peut être utilisée sur la mer indépendament du fait que n'importe laquelle de ces machines peut être installée sur toutes les sortes d'embarcations, mais que, dans ce cas elle doit toujours être fixée et orientée vers la proue de ces dernières pendant qu'elles sont en train de naviguer et que quand elles sont amarrées ou ancrées au port, elles doivent aussi avoir le dispositif tournant et ceci aussi quand elles ont mouillé l'ancre ou qu'il s'agit de plateformes de recherche ou d'exploitation. Dans le cas de plateformes qui ne servent qu'à l'obtention d'eau, cela doit se faire de façon à ce -que les coques soient utilisées comme réservoirs d'eau et au cas où il y en aurait plus d'une, elles devraient être unies par des structures métalliques, deux par deux, en forme de catamaran, de -façon à ce qu'elles soient encrées et autopropulsées pour décharger à terre la production d'eau ou de façon à ce que ces structures soient remorquées à terre au moyen de tuyauteries qui par pompage déchargeraient la production directement à terre et ceci continuellement.

DIXIÈME.- PROCÉDÉ ET MACHINE ÉOLIENNE SOLAIRE POUR L'OBTENTION DE LA VAPEUR D'EAU DE L'AIR ATMOSPHÉRIQUE.

SECCION b-b'

SECCION A-A'

$V_0$

EP 0 297 200 A1

FIG.-I

POOR QUALITY

FIG-1  VISTA PLANTA-CC'

SECCION A-A'

$V_o$

FIG.-II

EP 0 297 200 A1

SECCION b-b'

$V_o$

FIG.-III

EP 0 297 200 A1

FIG.-IV

SECCION b-b'

$V_o$

EP 0 297 200 A1

FIG· V

EP 0 297 200 A1

FIG. VI

FIG-VII

DETALLE 'C'
EN SECCION
DIAMETRAL.

"C"

20

29

23

42

2

24

5

31

49

5

24

5

47

B

9

36

49

51

50

36

49

9

7

52

10

36

36

9

10

49

36

9

9

10

SECCION a-a'

"D'

a'

a

V₀

A

d

d'

DETALLE "D"

# FIG - VIII

**POOR QUALITY**

Office européen
des brevets

**RAPPORT DE RECHERCHE EUROPEENNE**

Numero de la demande

EP  87 87 0044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 117 656  (SMYTH)<br>* Abrégé; figures; spécification; revendications * | 1,2,4 | C 02 F   1/00<br>B 01 D  53/26 |
| X | FR-A-2 321 016  (MEHNERT)<br>* Revendications 1,4,6,9 * | 1,4,5 | |
| X | FR-A-2 541 370  (POHANKA)<br>* Revendications * | 1,4,5 | |
| X | FR-A-2 528 321  (COMMISSARIAT A L'ENERGIE ATOMIQUE)<br>* Revendications * | 1 | |
| X | GB-A-2 151 504  (WILLS)<br>* Revendications * | 1 | |
| A | DE-A-3 433 119  (ALFRED TEVES GmbH)<br>* Revendications * | 1 | |
| A | FR-A-2 130 620  (ERNO)<br>* Revendications * | 1 | DOMAINES TECHNIQUES RECHERCHES (Int. Cl.4) |
| A,P | EP-A-0 227 628  (XRG)<br>* Revendications * | 1 | C 02 F<br>B 01 D |

Le présent rapport a été établi pour toutes les revendications

| Lieu de la recherche | Date d'achèvement de la recherche | Examinateur |
|---|---|---|
| LA HAYE | 21-01-1988 | KASPERS H.M.C. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P0402)